# FASCICULE DE BREVET EUROPEEN

(11) **EP 2 964 991 B1**
(45) Date de publication et mention de la délivrance du brevet: **13.09.2017**
(21) Numéro de dépôt: 14708035.2
(22) Date de dépôt: 06.03.2014
(51) Int. Cl.: B65D 59/06, F16L 33/01

(54) **MÉTHODE DE MONTAGE D'UN EMBOUT DE CONDUITE FLEXIBLE ET PRÉ-ASSEMBLAGE ASSOCIÉ**
VERFAHREN ZUR MONTAGE EINES ENDSTÜCKS EINES FLEXIBLEN ROHRS UND ENTSPRECHENDE VORMONTAGE
METHOD FOR ASSEMBLING AN END-PIECE OF A FLEXIBLE PIPE AND ASSOCIATED PRE-ASSEMBLY

(30) Priorité: 07.03.2013 FR 1352041
(43) Date de publication de la demande: 13.01.2016
(73) Titulaire: Technip France, 92400 Courbevoie (FR)
(72) Inventeur: LE BLAN, Benjamin, F-76000 Rouen (FR); BRUNO, German, 69006 Lyon (FR); PECKEU, Grégory, 27310 Bourg-Achard (FR); COLMARD, Antoine, F-76190 Etoutteville (FR)
(74) Mandataire: Lavoix
(86) Numéro de dépôt international: PCT/EP2014/054301
(87) Numéro de publication internationale: WO 2014/135612

(56) Documents cités:
- EP-B1- 1 407 182
- JP-A- H04 171 390
- JP-A- H05 231 576
- JP-A- S60 215 190
- JP-A- S62 101 991
- JP-A- S62 113 992
- JP-U- H0 338 489

## Description

La présente invention concerne une méthode de montage d'un embout de conduite flexible selon le préambule de la revendication 1.

La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

D'une manière connue, une telle conduite comporte une structure interne tubulaire comprenant au moins une gaine de pression. La conduite comporte des nappes d'armures de traction disposées autour de la structure interne tubulaire.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des nappes d'armures de traction s'étendant le long de la conduite.

Le montage des embouts de la conduite, en particulier, de l'extrémité des nappes d'armures de traction dans l'embout est une étape critique pour préserver l'intégrité de la conduite lors de son utilisation.

A cet effet, lors du montage de l'embout, les tronçons d'extrémité des nappes d'armures sont décollés de la structure interne de la conduite et sont repliés vers l'arrière pour permettre l'introduction d'un ensemble de sertissage de la gaine interne de la conduite.

La voûte d'extrémité de l'embout est ensuite introduite à l'extrémité de la structure interne, et les tronçons d'extrémité des nappes d'armures sont dépliés vers l'axe de la conduite contre la voûte.

Puis, un capot externe de l'embout est fixé autour de la voûte, autour des tronçons d'extrémité des nappes d'armures et un matériau propre à se solidifier est introduit dans la chambre intermédiaire située entre le capot et la voûte, afin de noyer les tronçons d'extrémité.

Le décollage des tronçons d'extrémité des nappes d'armures à l'écart de la structure interne doit être effectué avec soin pour éviter de détériorer ou de solliciter mécaniquement les tronçons d'extrémité des fils d'armure, afin de préserver leur longévité dans le temps.

À cet effet, WO 03/004921 décrit une méthode de montage dans laquelle un collier de blocage métallique en trois parties est engagé autour des nappes d'armures à l'arrière du point de décollement souhaité.

Ensuite, un guide annulaire réalisé dans une matière permettant de préserver la surface des fils d'armure, par exemple en nylon, est disposé sur le collier de blocage.

Les tronçons d'extrémité de la nappe externe sont ensuite repliés vers l'arrière autour du guide annulaire, les tronçons d'extrémité de la nappe interne restant plaqués contre la structure intérieure.

Le guide annulaire en nylon présente une surface avant incurvée qui limite la courbure des armures lorsque celles-ci sont repliées vers l'arrière.

Ensuite, la bande anti-usure disposée entre la nappe interne et la nappe externe est découpée au plus près du point de décollement des tronçons d'extrémité de la nappe externe, à proximité du collier de blocage. Les tronçons d'extrémité de la nappe interne sont ensuite retournés directement sur les tronçons d'extrémité de la nappe externe en suivant sensiblement le même rayon de courbure.

L'ensemble de sertissage avant et la voûte sont ensuite mis en place et les tronçons d'extrémité sont dépliés vers l'avant contre la voûte.

Une telle méthode peut encore être améliorée. En effet, la bande anti-usure positionnée entre la nappe interne et la nappe externe est coupée au plus près du point de décollement de la nappe externe. De ce fait, lorsque les tronçons d'extrémité des deux nappes sont dépliés vers la voûte de l'embout, les tronçons d'extrémité de la nappe externe sont susceptibles de frotter contre ceux de la nappe interne au niveau du point de décollement, dans une zone où les fils d'armures sont écrouis et où leur résistance mécanique est moindre.

Dans certains cas, ceci peut conduire à un affaiblissement des propriétés mécaniques de la conduite.

JP-S-62101991 décrit également une méthode du type précité.

Un but de l'invention est donc d'améliorer la méthode de montage de l'embout de la conduite, afin d'augmenter la tenue mécanique de la conduite au cours du temps.

À cet effet, l'invention a pour objet une méthode selon la revendication 1.

La méthode selon l'invention peut comprendre l'une ou plusieurs des caractéristiques des revendications 2 à 8, prise(s) isolément ou suivant toute combinaison techniquement possible.

L'invention a également pour objet un pré-assemblage selon la revendication 9.

Le pré-assemblage selon l'invention peut comprendre l'une ou plusieurs des caractéristiques des revendications 10 à 12, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une conduite flexible ;
- la figure 2 est une vue schématique partielle, prise en coupe suivant un plan axial médian des éléments pertinents d'un embout de la conduite de la figure 1 ;
- la figure 3 est une vue analogue à la figure 2 d'un premier pré-assemblage de l'embout de la figure 2, lors d'une étape de la méthode de montage dans laquelle les tronçons d'extrémité des nappes d'armures sont repliés vers l'arrière ; le pré-assemblage de la figure 3 n'est pas compris par la présente invention;
- la figure 4 est une vue analogue à la figure 3, après dépliage des tronçons d'extrémité des nappes d'armures vers l'avant ;
- la figure 5 est une vue analogue à la figure 3 d'un pré-assemblage selon l'invention.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

Par ailleurs, les termes « amont » et « aval » s'entendent généralement par rapport au sens normal de circulation d'un fluide pétrolier au sein de la conduite.

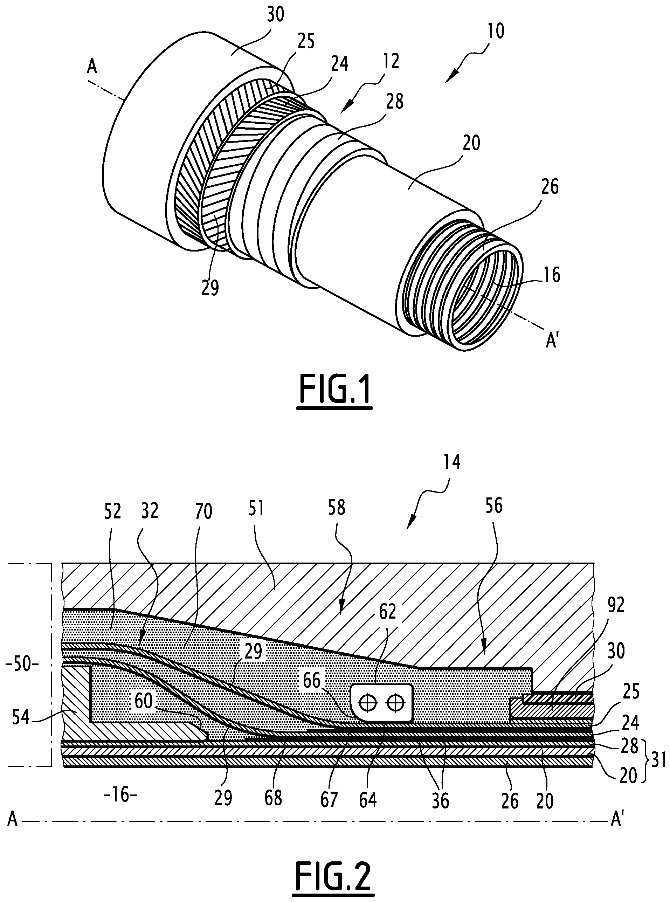

Une méthode de montage n'étant pas comprise par la présente invention est mise en oeuvre lors de la fabrication d'une première conduite flexible 10, illustrée partiellement par la figure 1 et par la figure 2.

La conduite flexible 10 comporte un tronçon central 12 illustré en partie sur la figure 1. Elle comporte, à chacune des extrémités axiales du tronçon central 12, un embout d'extrémité 14 (non visible sur la Figure 1) dont les parties pertinentes sont représentées sur la figure 2.

La méthode est destinée au montage des embouts 14 aux extrémités du tronçon central 12.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine 20 à base de matériau polymère constituant avantageusement une gaine de pression.

La conduite 10 comporte en outre une pluralité de nappes d'armures de traction 24, 25 disposées extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et les nappes d'armures de traction 24, 25 et une gaine externe 30, destinée à la protection de la conduite 10.

Les couches 20, 26, 28 situées intérieurement par rapport aux nappes d'armures 24, 25 seront désignés par la suite par le terme « structure interne tubulaire » 31 de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

Dans l'exemple représenté sur la figure 1, la conduite flexible 10 comporte une nappe d'armures interne 24, appliquée sur la structure interne 31 et une nappe d'armures externe 25 autour de laquelle est disposée la gaine extérieure 30.

Chaque nappe d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première nappe 24 sont enroulés généralement suivant un angle opposé par rapport aux éléments d'armure 29 d'une deuxième nappe 25. Ainsi, si l'angle d'enroulement des éléments d'armure 29 de la première nappe 24 est égal à + α, α étant compris entre 25° et 55°, l'angle d'enroulement des éléments d'armure 29 de la deuxième nappe 25 disposée au contact de la première nappe 24 est par exemple de - α, avec α compris entre 25° et 55°.

Les éléments d'armure 29 sont par exemple formés par des fils métalliques, ou par des rubans.

Comme visible sur la figure 2, les éléments d'armure 29 présentent chacun un tronçon d'extrémité 32 introduit dans l'embout 14. Le tronçon d'extrémité 32 s'étend jusqu'à une extrémité libre disposée dans l'embout 14. Il présente avantageusement une trajectoire hélicoïdale ou pseudo-hélicoïdale d'axe A-A' dans l'embout 14.

Dans cet exemple, chaque nappe d'armures 24, 25 repose sur au moins une bande anti-usure 36. La bande anti-usure 36 est par exemple réalisée en plastique.

Ainsi, une bande anti-usure 36 est intercalée entre la nappe interne 24 et la structure interne 31. Une autre bande anti-usure 36 est intercalée entre la nappe interne 24 et la nappe externe 25.

Dans l'exemple représenté sur la figure 2, le tronçon d'extrémité 32 de chaque élément d'armure 29 est détoroné pour être dépourvu de bande anti-usure.

La gaine externe 30 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 32 des éléments d'armure 29.

L'embout 14 comporte en outre un ensemble avant 54 d'étanchéité autour de la gaine de pression 20, et un ensemble arrière 56 d'étanchéité autour de la gaine extérieure 30.

L'embout 14 comprend de plus un ensemble 58 de fixation des couches d'armures 24, 25 dans la chambre 52.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

Le capot 51 délimite la chambre 52 radialement vers l'extérieur. Il couvre vers l'extérieur les tronçons d'extrémité 32 des nappes d'armures 24, 25 et s'étend axialement jusqu'à l'ensemble arrière d'étanchéité 56.

L'ensemble avant 54 d'étanchéité comporte au moins une bague de sertissage de la gaine de pression 20. Il délimite vers l'arrière une surface inclinée 60 de guidage du décollement des tronçons d'extrémité 32 des nappes d'armures 24, 25.

L'ensemble de fixation 58 comporte un collier de blocage arrière 62, appliqué sur la nappe externe 25 et avantageusement un matériau 70 de remplissage solide de la cavité 52, noyant les tronçons d'extrémité 32 des nappes 24, 25 et s'il est installé, le collier 62.

Le collier de blocage 62 comporte généralement une pluralité de segments périphériques assemblés les uns avec les autres. Préférentiellement, il se présente sous la forme d'un collier métallique en plusieurs parties de collier, par exemple trois parties.

Les parties de collier se présentent avantageusement sous forme de segments périphériques d'étendue angulaire inférieure à 180°, assemblés les uns avec les autres pour former le collier 62.

De manière avantageuse, le collier de blocage 62 reste à demeure autour de la nappe externe 25 mais il peut aussi être ôté avant remplissage de la chambre 52 de l'embout 14.

Préférentiellement, un ruban ou une bande anti-usure (non représenté) est intercalée entre le collier de blocage 62 et la nappe d'armure externe 25 pour éviter tout risque de frottement et par suite, d'usure des éléments d'armure 29. Typiquement, la bande anti-usure est réalisée à partir d'au moins un polymère ou un copolymère choisi parmi les polyamides, les polyvinylidéniques, etc.

Le collier 62 présente une surface périphérique intérieure 64 dirigée vers l'axe A-A', et appliquée sur la nappe externe 25. Il présente en outre une surface avant 66 au moins partiellement divergente vers l'avant.

Lorsque l'embout 14 est monté, et que l'ensemble de fixation 58 est en place, chaque tronçon d'extrémité 32 d'un élément d'armure 29 décolle radialement à l'écart de l'axe A-A', à l'avant du collier de blocage 62. Chaque tronçon arrière d'un élément d'armures 29 situé à l'arrière du collier de blocage 62 s'étend sensiblement dans une enveloppe cylindrique d'axe A-A'.

Dans l'exemple représenté sur la figure 2, la première position axiale 67 de décollement de chaque tronçon d'extrémité 32 de la nappe externe 25 est située au voisinage du collier arrière 62, à l'arrière de la deuxième position axiale 68 de décollement de chaque tronçon d'extrémité 32 de la nappe interne 24.

Les positions axiales de décollement 67, 68 des tronçons d'extrémité 32 respectifs de la nappe interne 24 et de la nappe externe 25 sont donc espacées axialement le long de l'axe A-A'. Ceci limite le risque de contact entre les éléments d'armures 29 respectifs, et donc le risque d'affaiblissement local de ces éléments 29.

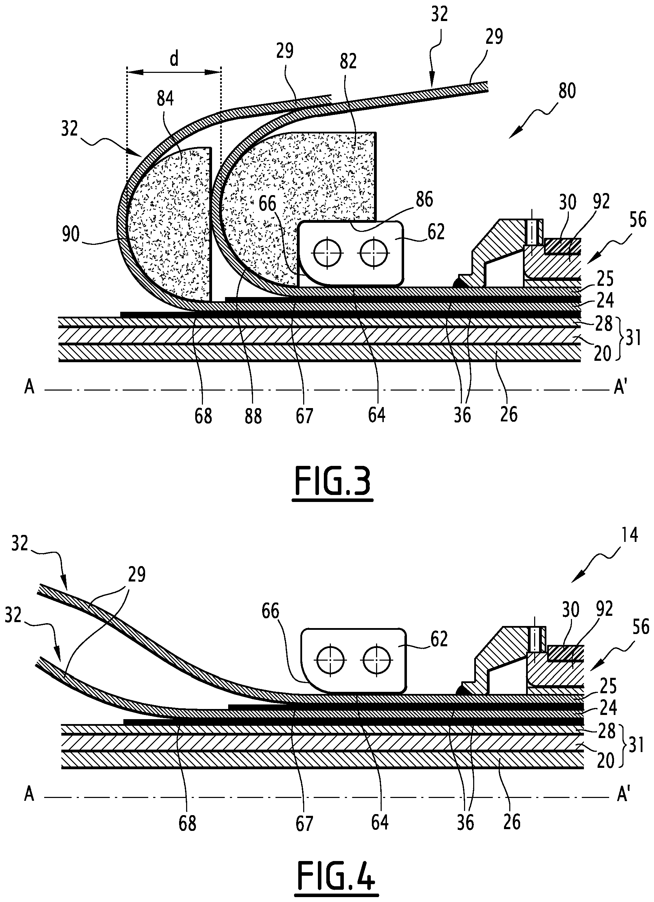

Comme on le verra plus bas, la mise en oeuvre de la méthode de montage correspondante à la figure 3 comprend la formation d'un pré-assemblage 80 de l'embout 14 visible sur la figure 3.

Le pré-assemblage 80 comporte, outre la structure interne 31, les nappes d'armures 24, 25, et le collier arrière 62, un premier guide 82 de conformation du retournement de la nappe externe 25 et, un deuxième guide 84 de conformation du retournement de la nappe interne 24, décalé axialement vers l'avant par rapport au premier guide 82 et en contact avec la face interne d'au moins un élément d'armure 29.

Chaque guide 82, 84 est avantageusement formé d'un matériau propre à préserver la surface des éléments d'armure 29. Par exemple, chaque guide 82, 84 est formé en une matière plastique, tel qu'un polyamide, notamment en nylon.

Les guides 82 et 84 comprennent une pluralité de segments périphériques assemblés les uns avec les autres ou bien sont réalisés en une seule partie.

Leurs dimensions sont variables et sont fonction de la taille la chambre 52 et/ou de la configuration d'ancrage des nappes interne 24 et externe 25 choisie.

Le premier guide 82 est monté de manière amovible sur le collier arrière 62. Il définit dans cet exemple un logement axial arrière 86 d'insertion du collier arrière 62.

Il présente une surface avant 88 incurvée et convexe, de convexité dirigée vers l'avant. La surface avant 88 est de préférence circonférentielle autour de l'axe A-A'.

Avantageusement, en section dans un plan axial médian, la surface avant 88 présente un rayon de courbure inférieur au rayon de courbure minimal de chaque élément d'armure 29. Ce rayon de courbure est par exemple supérieur ou égal à 20 mm.

Typiquement, le premier guide 82 est formé par une bague engagée autour de la nappe externe 25.

Dans l'exemple représenté sur la figure 3, le deuxième guide 84 est engagé de manière amovible autour de la nappe interne 24. Il est disposé à l'avant du premier guide 82.

La distance d séparant axialement l'extrémité avant du premier guide 82 de l'extrémité avant du deuxième guide 84 est supérieure ou égale à la longueur cumulée du rayon de courbure de la surface avant 88, de l'épaisseur de la nappe externe 25 et de la longueur totale du deuxième guide 84.

Le deuxième guide 84 présente une surface avant 90 incurvée et convexe, de convexité dirigée vers l'avant. La surface avant 90 est de préférence circonférentielle autour de l'axe A-A'.

Avantageusement, En section dans un plan axial médian, la surface avant 90 présente un rayon de courbure inférieur au rayon de courbure minimal de chaque élément d'armure 29. Ce rayon de courbure est par exemple supérieur ou égal à 20 mm.

Typiquement, le deuxième guide 84 est formé par une bague circonférentielle engagée autour de la nappe interne 24.

Une méthode de montage de l'embout 14 selon l'invention va maintenant être décrite.

Initialement, l'extrémité de la gaine externe 30 d'étanchéité du tronçon central 12 de la conduite tubulaire flexible 10 est découpée, pour dénuder les tronçons d'extrémité 32 des nappes d'armures 24, 25.

Puis, l'ensemble arrière d'étanchéité 56 est mis en place. À cet effet, une canule arrière d'appui 92 est avantageusement insérée sous l'extrémité avant de la gaine externe 30.

Ensuite, le collier arrière de blocage 62 des nappes d'armures 24, 25 est installé autour de la nappe externe 25, à l'avant de l'extrémité avant de la gaine externe 30.

Les segments du collier 62 sont disposés suivant une circonférence autour de l'axe A-A', et sont assemblés les uns aux autres. La surface interne 64 est alors appliquée extérieurement sur la nappe externe 25.

Préférentiellement, un ruban ou une bande anti-usure (non représenté) est intercalée entre le collier de blocage 62 et la nappe d'armure externe 25 pour éviter tout risque de frottement et par suite, d'usure des éléments d'armure 29. Typiquement, la bande anti-usure est réalisée à partir d'au moins un polymère ou un copolymère choisi parmi les polyamides, les polyvinylidéniques, etc.

Ceci étant fait, le premier guide de conformation 82 est installé sur le collier de blocage arrière 62, à l'avant de celui-ci. Dans l'exemple représenté sur la figure 3, le collier de blocage arrière 62 est introduit partiellement dans le logement 86, de sorte que le premier guide de conformation 82 se cale axialement sur le collier de blocage 62.

Les tronçons d'extrémité 32 des éléments d'armure 29 de la nappe externe 25 sont alors repliés vers l'arrière autour de la surface avant 88 du premier guide 82, puis à l'extérieur radialement du premier guide 82, et du collier de blocage arrière 62.

Ils s'appliquent sur la surface avant 88 du premier guide 82 en formant un coude à l'avant du collier de blocage arrière 62.

Grâce au rayon de courbure relativement élevé de la surface avant 88, les tronçons d'extrémité 32 adoptent une courbure relativement faible, ce qui limite le risque d'endommagement, ou de détérioration mécanique.

L'extrémité avant de la bande anti-usure 36 située entre la nappe externe 25 et la nappe interne 24 est alors accessible.

Une découpe d'une région avant de la bande anti-usure 36 est alors effectuée pour que le bord avant de cette bande 36 s'étende sensiblement en regard de l'extrémité avant du premier guide 82

La longueur de bande 36 accessible est relativement importante, ce qui permet de la découper plus facilement.

Ensuite, le deuxième guide de conformation 84 est inséré autour de la nappe interne 24, à l'avant du premier guide 82.

Les tronçons d'extrémité 32 des éléments d'armure 29 de la nappe interne 24 sont alors repliés vers l'arrière autour de la surface avant 90 du deuxième guide 84.

Ils s'appliquent sur la surface avant 90 du deuxième guide 84 en formant un coude à l'avant du deuxième guide 84.

Comme précédemment, grâce au rayon de courbure relativement élevé de la surface avant 90, les tronçons d'extrémité 32 adoptent une courbure relativement faible, ce qui limite le risque d'endommagement, ou de détérioration mécanique.

Puis, la bande anti-usure 36 située entre la nappe interne 24 et la structure interne 31 est découpée. Le bord avant de cette bande 36 est alors placé sensiblement en regard de l'extrémité avant du deuxième guide 90, à l'écart axialement du bord avant de la bande 36 située entre les nappes 24, 25.

L'ensemble avant d'étanchéité 54 est alors mis en place, à l'avant du premier guide 84, avec l'engagement de la bague de sertissage autour de la structure interne 31.

L'extrémité de la voûte 28 se trouve ainsi insérée intérieurement à la bague de sertissage.

La gaine de pression 20 est ensuite sertie par la bague de sertissage, ainsi que la voûte de pression 28, lorsqu'elle est présente.

Ceci étant fait, les tronçons d'extrémité 32 des éléments d'armure 29 de la nappe interne 24 sont dépliés vers l'avant pour reposer au niveau de la voûte 28 et le deuxième guide 84 est ensuite retiré.

De même, et de manière séparée, les tronçons d'extrémité 32 des éléments d'armure 29 de la nappe externe 25 sont dépliés vers l'avant pour reposer au niveau de la nappe d'armure interne 24 et le premier guide 82 est ensuite retiré.

Les positions axiales 67, 68 de décollement des tronçons d'extrémité 32 respectifs de la nappe interne 24 et de la nappe externe 25 étant décalées le long de l'axe A-A', les tronçons d'extrémité 32 des éléments d'armure 29 n'entrent pas en contact les uns avec les autres lorsqu'ils sont dépliés vers l'avant.

Ainsi, le risque de frottement et de détérioration entre les éléments d'armure 29 des deux nappes 24, 25 est réduit. Le comportement en fatigue des nappes d'armures 24, 25 est alors grandement amélioré, ce qui augmente l'intégrité de la conduite flexible 10 dans le temps.

Puis, le capot 51 est mis en place autour des tronçons d'extrémité 32 et est fixé sur la voûte 50. Un matériau fluide propre à se solidifier est alors avantageusement introduit dans la chambre 52 pour noyer les tronçons d'extrémité 32 et le collier arrière 62.

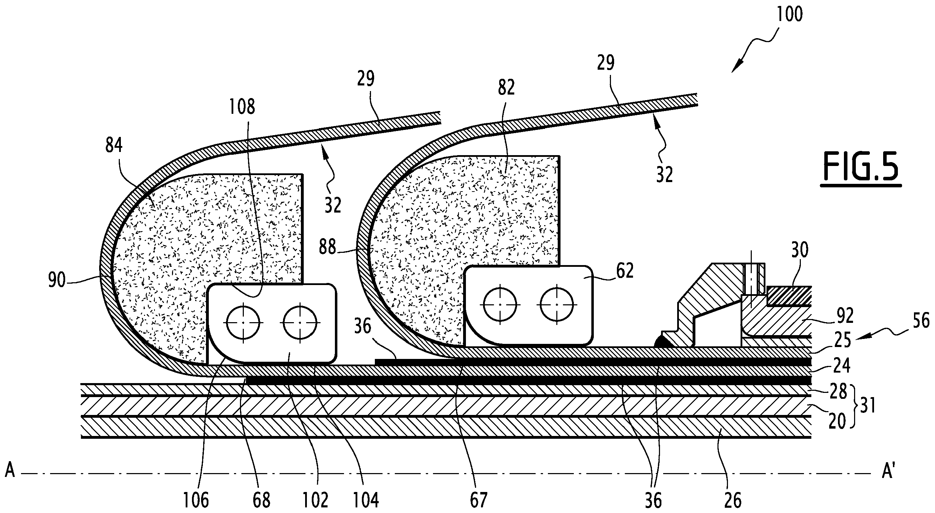

Un pré-assemblage 100 selon l'invention est illustré par la figure 5. Un tel pré-assemblage 100 est mis en oeuvre dans une méthode de montage selon l'invention.

À la différence du premier pré-assemblage 80, le deuxième pré-assemblage 100, qui correspond à la présente invention, comporte un collier avant de blocage 102. Ce collier 102 est de préférence en métal.

Le collier avant de blocage 102 est monté autour de la nappe interne 24, intérieurement par rapport à la nappe externe 25, à l'avant du premier guide 82.

Le collier avant 102 comporte avantageusement une pluralité de segments périphériques assemblés les uns avec les autres. Comme le collier arrière 62, il peut rester à demeure autour de la nappe interne 24 mais il peut aussi être ôté avant remplissage de la chambre 52 de l'embout 14.

Il présente une surface périphérique intérieure 104 dirigée vers l'axe A-A', et appliquée sur la nappe externe 25.

Comme décrit plus haut par rapport au collier arrière 62, un ruban ou une bande anti-usure (non représenté) est intercalée entre le collier de blocage 102 et la nappe d'armure interne 24 pour éviter tout risque de frottement et par suite, d'usure des éléments d'armure 29.

Il présente en outre une surface avant 106 au moins partiellement divergente vers l'avant pour limiter le décollement des tronçons d'extrémité 32 de la nappe d'armures interne 24.

Le deuxième guide 84 est monté de manière amovible sur le collier avant 102. Il définit dans cet exemple un logement axial arrière 108 d'insertion du collier avant 102.

Le procédé de montage selon l'invention diffère du procédé de montage correspondant à la figure 3 en ce qu'après le repliement des tronçons d'extrémité 32 des éléments d'armure 29 de la nappe extérieure 25, et après la découpe de la bande anti-usure 36 située entre la nappe interne 24 et la nappe externe 25, le collier avant 102 est inséré autour de la nappe interne 24 à l'avant du premier guide 82 et avantageusement à l'avant du bord avant de la bande 36 située entre les nappes 24, 25.

Le deuxième guide 84 est alors monté sur le collier avant 102. Les tronçons d'extrémité 32 des éléments d'armure 29 de la nappe interne 24 sont ensuite repliés autour de la surface avant 90 du deuxième guide 84, puis à l'extérieur radialement du deuxième guide 84, et du collier avant 102.

La méthode de montage correspondante à la figure 5 est par ailleurs analogue à la méthode de montage correspondante à la figure 3.

## Revendications

1. Méthode de montage d'un embout (14) de conduite flexible (10), la conduite flexible (10) comportant une structure tubulaire interne (31) présentant un axe central (A-A'), une nappe interne (24) d'armures de traction disposée autour de la structure tubulaire interne (31) et une nappe externe (25) d'armures de traction disposée autour de la nappe interne (24), la méthode comprenant les étapes suivantes :
- mise en place autour de la nappe externe (25), d'un collier de blocage arrière (62) des nappes d'armures (24, 25) ;
- mise en place d'un premier guide (82) de conformation du repliement des tronçons d'extrémité (32) de la nappe externe (25) ;
- repliement vers l'arrière des tronçons d'extrémité (32) de la nappe externe (25) en formant un coude à l'avant du collier de blocage (62), les tronçons d'extrémité (32) de la nappe externe (25) s'appuyant sur le premier guide (82) ;
- repliement vers l'arrière des tronçons d'extrémité (32) de la nappe interne (24) ;
**caractérisée en ce qu'**elle comporte, avant l'étape de repliement vers l'arrière des tronçons d'extrémité (32) de la nappe interne (24), la mise en place d'un deuxième guide (84) de conformation du repliement des tronçons d'extrémité (32) de la nappe interne (24), le deuxième guide de conformation (84) étant distinct du premier guide de conformation (82), les tronçons d'extrémité (32) de la nappe interne (24) s'appuyant sur le deuxième guide de conformation (84) après l'étape de repliement,
**en ce qu'**elle comporte, après les étapes de repliement, les étapes suivantes :
- introduction d'un ensemble avant d'étanchéité (54) autour de la structure tubulaire interne (31) ;
- placement d'une voûte (50) de l'embout à l'extrémité de la structure tubulaire interne (31) ;
- repliement vers l'avant des tronçons d'extrémité (32) de la nappe interne (24) pour les placer autour de la voûte (50) ;
- retrait du deuxième guide de conformation (84) ;
- repliement vers l'avant des tronçons d'extrémité (32) de la nappe externe (25) pour les placer extérieurement aux tronçons d'extrémité de la nappe interne (24) ;
- retrait du premier guide de conformation (82) ; et
- fixation d'un capot externe (51) de l'embout sur la voûte (50), la voûte (50) et le capot externe (51) délimitant entre eux une chambre (52) de réception des tronçons d'extrémité (32) de la nappe interne (24) et de la nappe externe (25),
**en ce que** l'étape de mise en place du deuxième guide de conformation (84) s'effectue après le repliement vers l'arrière des tronçons d'extrémité (32) de la nappe externe (25) autour du premier guide de conformation (82), et avant le repliement vers l'arrière des tronçons d'extrémité (32) de la nappe interne (24),
et **en ce que** la mise en place du deuxième guide de conformation (84) comporte la disposition, autour de la nappe interne (24), d'un collier avant (102) de blocage de la nappe interne (24), le deuxième guide de conformation (84) étant placé sur le collier avant de blocage (102).

2. Méthode selon la revendication 1, **caractérisée en ce qu'**après les étapes de repliement, les tronçons d'extrémité (32) de la nappe externe (25) décollent de la nappe interne (24) en une première position axiale (67) le long de l'axe central, les tronçons d'extrémité (32) de la nappe interne (24) décollant de la structure tubulaire interne (31) en une deuxième position axiale (68), décalée axialement de la première position axiale (67).

3. Méthode selon la revendication 1 ou 2, **caractérisée en ce que** le deuxième guide de conformation (84) est disposé à l'avant du coude formé par les tronçons d'extrémité (32) de la nappe externe (25) lors de sa mise en place.

4. Méthode selon l'une quelconque des revendications précédentes, **caractérisée en ce qu'**elle comporte, après le repliement des tronçons d'extrémité (32) de la nappe externe (25), et avant la mise en place du deuxième guide de conformation (84), la découpe d'une bande anti-usure (36) positionnée entre la nappe interne (24) et la nappe externe (25)

5. Méthode selon l'une quelconque des revendications précédentes, **caractérisée en ce qu'**elle comporte une première étape de retrait du collier avant (102), après avoir retiré le deuxième guide de conformation (84) et avant de venir replier vers l'avant les tronçons d'extrémité (32) de la nappe interne (24) pour les placer autour de la voûte (50).

6. Méthode selon l'une quelconque des revendications précédentes, **caractérisée en ce qu'**elle comporte une deuxième étape de retrait du collier arrière (62), après avoir retiré le premier guide de conformation (82) et avant de venir replier vers l'avant les tronçons d'extrémité (32) de la nappe externe (25) pour les placer extérieurement aux tronçons d'extrémité de la nappe interne (24).

7. Méthode selon l'une quelconque des revendications précédentes, **caractérisée en ce qu'**elle comporte l'introduction d'un matériau (70) de remplissage propre à se solidifier dans la chambre (52) de réception.

8. Méthode selon l'une quelconque des revendications précédentes, **caractérisée en ce que** le premier guide (82) et le deuxième guide (84) présentent chacun une surface avant convexe (88, 90), de convexité dirigée vers l'avant, les tronçons d'extrémité (32) respectifs de la nappe externe (25) et de la nappe interne (24) s'appliquant chacun sur une surface avant respective (88, 90) du premier guide (82) et du deuxième guide (84).

9. Pré-assemblage (100) d'embout (14) de conduite flexible (10), la conduite flexible (10) comportant une structure tubulaire interne (31) présentant un axe central (A-A'), une nappe interne (24) d'armures de traction disposée autour de la structure tubulaire interne (31) et une nappe externe (25) d'armures de traction disposée autour de la nappe interne (24),
le pré-assemblage (100) comportant :
- un collier (62) de blocage arrière des nappes d'armures (24, 25) mis en place autour de la nappe externe (25) ;
- un premier guide (82) de conformation du repliement des tronçons d'extrémité (32) de la nappe externe (25), les tronçons d'extrémité (32) de la nappe externe (25) s'appuyant sur le premier guide (82) en formant un coude à l'avant du collier de blocage arrière (62) ; le pré-assemblage (100) comportant un deuxième guide (84) de conformation du repliement des tronçons d'extrémité (32) de la nappe interne (24), distinct du premier guide de conformation (82), les tronçons d'extrémité (32) de la nappe interne (24) s'appuyant sur le deuxième guide (84) en formant un coude à l'avant du collier de blocage arrière (62),
le pré-assemblage (100) étant **caractérisé en ce qu'**il comporte un collier de blocage avant (102) de la nappe interne (24), le deuxième guide de conformation (84) étant placé sur le collier de blocage avant (102).

10. Pré-assemblage (100) selon la revendication 9, **caractérisé en ce que** les tronçons d'extrémité (32) de la nappe externe (25) décollent de la nappe interne (24) en une première position axiale (67) le long de l'axe central (A-A'), les tronçons d'extrémité (32) de la nappe interne (24) décollant de la structure tubulaire interne (31) en une deuxième position axiale (68) décalée axialement de la première position axiale (67).

11. Pré-assemblage (100) selon l'une quelconque des revendications 9 à 10, **caractérisé en ce qu'**il comporte une bande anti-usure (36) disposée entre la nappe interne (24) et la nappe externe (25), la bande anti-usure (36) présentant un bord avant situé entre le premier guide (82) et le deuxième guide (84).

12. Pré-assemblage (100) selon l'une quelconque des revendications 9 à 11, **caractérisé en ce que** le premier guide (82) et le deuxième guide (84) présentent chacun une surface avant convexe (88 ; 90), de convexité dirigée vers l'avant, les tronçons d'extrémité respectifs (32) de la nappe externe (25) et de la nappe interne (24) s'appliquant chacun sur une surface avant respective (88 ; 90) du premier guide (82) et du deuxième guide (84).

## Patentansprüche

1. Methode zur Montage eines Endstücks (14) eines Schlauchs (10), wobei der Schlauch (10) eine innere Rohrstruktur (31) enthält, die eine Mittelachse (A-A'), eine innere Schicht (24) von Zugarmierungen, die rund um die innere Rohrstruktur (31) angeordnet ist, und eine äußere Schicht (25) von Zugarmierungen, die rund um die innere Schicht (24) angeordnet ist, aufweist, wobei die Methode die folgenden Schritte umfasst:
- Platzierung rund um die äußere Schicht (25) einer hinteren Schelle (62) zum Feststellen der Armierungsschichten (24, 25),
- Platzierung einer ersten Führung (82) zur Formgebung des Umbiegens der Endabschnitte (32) der äußeren Schicht (25),
- Umbiegen nach hinten der Endabschnitte (32) der äußeren Schicht (25) mit Ausbildung eines Bogens vor der Feststellschelle (62), wobei die Endabschnitte (32) der äußeren Schicht (25) an der ersten Führung (82) anliegen,
- Umbiegen nach hinten der Endabschnitte (32) der inneren Schicht (24),
**dadurch gekennzeichnet, dass** sie, vor dem Schritt des Umbiegens nach hinten der Endabschnitte (32) der inneren Schicht (24), die Platzierung einer zweiten Führung (84) zur Formgebung des Umbiegens der Endabschnitte (32) der inneren Schicht (24) umfasst, wobei die zweite Führung zur Formgebung (84) von der ersten Führung zur Formgebung (82) verschieden ist, wobei die Endabschnitte (32) der inneren Schicht (24) an der zweiten Führung zur Formgebung (84) nach dem Schritt des Umbiegens anliegen, dadurch, dass sie nach den Schritten des Umbiegens die folgenden Schritte umfasst:
- Einführung einer vorderen Dichtungseinheit (54) rund um die innere Rohrstruktur (31),
- Platzierung einer Wölbung (50) des Endstücks am Ende der inneren Rohrstruktur (31),
- Umbiegen nach vorne der Endabschnitte (32) der inneren Schicht (24), um sie rund um die Wölbung (50) zu platzieren,
- Entfernen der zweiten Führung zur Formgebung (84),
- Umbiegen nach vorne der Endabschnitte (32) der äußeren Schicht (25), um sie außen an den Endabschnitten der inneren Schicht (24) zu platzieren,
- Entfernen der ersten Führung zur Formgebung (82), und
- Fixierung einer äußeren Abdeckung (51) des Endstücks auf der Wölbung (50), wobei die Wölbung (50) und die äußere Abdeckung (51) zwischen sich einen Raum (52) zur Aufnahme der Endabschnitte (32) der inneren Schicht (24) und der äußeren Schicht (25) begrenzen,
dadurch, dass der Schritt zur Platzierung der zweiten Führung zur Formgebung (84) nach dem Umbiegen nach hinten der Endabschnitte (32) der äußeren Schicht (25) rund um die erste Führung zur Formgebung (82) erfolgt, und vor dem Umbiegen nach hinten der Endabschnitte (32) der inneren Schicht (24),
und dadurch, dass die Platzierung der zweiten Führung zur Formgebung (84) die Anordnung, rund um die innere Schicht (24), einer vorderen Feststellschelle (102) der inneren Schicht (24) umfasst, wobei die zweite Führung zur Formgebung (84) auf der vorderen Feststellschelle (102) platziert ist.

2. Methode nach Anspruch 1, **dadurch gekennzeichnet, dass** nach den Schritten des Umbiegens die Endabschnitte (32) der äußeren Schicht (25) sich von der inneren Schicht (24) an einer ersten axialen Position (67) längs der Mittelachse lösen, wobei die Endabschnitte (32) der inneren Schicht (24) sich von der inneren Rohrstruktur (31) an einer zweiten axialen Position (68) lösen, die von der ersten axialen Position (67) axial versetzt ist.

3. Methode nach Anspruch 1 oder 2, **dadurch gekennzeichnet, dass** die zweite Führung zur Formgebung (84) vor dem Bogen, der durch die Endabschnitte (32) der äußeren Schicht (25) bei ihrer Platzierung gebildet wird, angeordnet ist.

4. Methode nach einem der vorhergehenden Ansprüche, **dadurch gekennzeichnet, dass** sie nach dem Umbiegen der Endabschnitte (32) der äußeren Schicht (25) und vor der Platzierung der zweiten Führung zur Formgebung (84) das Abschneiden eines verschleißmindernden Streifens (36) umfasst, der zwischen der inneren Schicht (24) und der äußeren Schicht (25) positioniert ist.

5. Methode nach einem der vorhergehenden Ansprüche, **dadurch gekennzeichnet, dass** sie einen ersten Schritt zum Entfernen der vorderen Schelle (102) umfasst, nach dem Entfernen der zweiten Führung zur Formgebung (84) und vor dem Umbiegen nach vorne der Endabschnitte (32) der inneren Schicht (24), um sie rund um die Wölbung (50) zu platzieren.

6. Methode nach einem der vorhergehenden Ansprüche, **dadurch gekennzeichnet, dass** sie einen zweiten Schritt zum Entfernen der hinteren Schelle (62) umfasst, nach dem Entfernen der ersten Führung zur Formgebung (82) und vor dem Umbiegen nach vorne der Endabschnitte (32) der äußeren Schicht (25), um sie außen an den Endabschnitten der inneren Schicht (24) zu platzieren.

7. Methode nach einem der vorhergehenden Ansprüche, **dadurch gekennzeichnet, dass** sie die Einführung eines Materials (70) zum Verfüllen umfasst, das geeignet ist, sich in dem Raum (52) zur Aufnahme zu verfestigen.

8. Methode nach einem der vorhergehenden Ansprüche, **dadurch gekennzeichnet, dass** die erste Führung (82) und die zweite Führung (84) jede eine konvexe Vorderseite (88, 90) aufweisen, mit nach vorne ausgerichteter Konvexität, wobei die jeweiligen Endabschnitte (32) der äußeren Schicht (25) und der inneren Schicht (24) jeder auf einer jeweiligen Vorderseite (88, 90) der ersten Führung (82) und der zweiten Führung (84) anliegen.

9. Vormontage (100) vom Endstück (14) eines Schlauchs (10), wobei der Schlauch (10) eine innere Rohrstruktur (31) enthält, die eine Mittelachse (A-A'), eine innere Schicht (24) von Zugarmierungen, die rund um die innere Rohrstruktur (31) angeordnet ist, und eine äußere Schicht (25) von Zugarmierungen, die rund um die innere Schicht (24) angeordnet ist, aufweist,
wobei die Vormontage (100) umfasst:
- eine Schelle (62) zum Feststellen der Armierungsschichten (24, 25), die rund um die äußere Schicht angebracht ist,
- eine erste Führung (82) zur Formgebung des Umbiegens der Endabschnitte (32) der äußeren Schicht (25), wobei die Endabschnitte (32) der äußeren Schicht (25) an der ersten Führung (82) anliegen, wobei sie einen Bogen vor der hinteren Feststellschelle bilden,
wobei die Vormontage (100) umfasst
eine zweite Führung (84) zur Formgebung des
Umbiegens der Endabschnitte (32) der inneren Schicht (24), die von der ersten Führung zur Formgebung (82) verschieden ist, wobei die Endabschnitte (32) der inneren Schicht (24) an der zweiten Führung (84) anliegen, wobei sie einen Bogen vor der hinteren Feststellschelle bilden,
wobei die Vormontage (100) charakterisiert ist
dadurch, dass sie eine vordere Feststellschelle (102) der inneren Schicht (24) umfasst, wobei die zweite Führung zur Formgebung (84) auf der vorderen Feststellschelle (102) platziert ist.

10. Vormontage (100) nach Anspruch 9, **dadurch gekennzeichnet, dass** die Endabschnitte (32) der äußeren Schicht (25) sich von der inneren Schicht (24) an einer ersten axialen Position (67) längs der Mittelachse (A-A') lösen, wobei die Endabschnitte (32) der inneren Schicht (24) sich von der inneren Rohrstruktur (31) an einer zweiten axialen Position (68) lösen, die von der ersten axialen Position (67) axial versetzt ist.

11. Vormontage (100) nach einem der Ansprüche 9 bis 10, **dadurch gekennzeichnet, dass** sie einen verschleißmindernden Streifen (36) umfasst, der zwischen der inneren Schicht (24) und der äußeren Schicht (25) angeordnet ist, wobei der verschleißmindernde Streifen (36) eine Vorderkante aufweist, die zwischen der ersten Führung (82) und der zweiten Führung (84) liegt.

12. Vormontage (100) nach einem der Ansprüche 9 bis 11, **dadurch gekennzeichnet, dass** die erste Führung (82) und die zweite Führung (84) jede eine konvexe Vorderseite (88, 90) aufweisen, mit nach vorne ausgerichteter Konvexität, wobei die jeweiligen Endabschnitte (32) der äußeren Schicht (25) und der inneren Schicht (24) jeder auf einer jeweiligen Vorderseite (88, 90) der ersten Führung (82) und der zweiten Führung (84) anliegen.

## Claims

1. A method for assembling an end-piece (14) of a flexible pipe (10), the flexible pipe (10) including an inner tubular structure (31) having a central axis (A-A'), an inner ply (24) of tensile armors positioned around the inner tubular structure (31) and an outer ply (25) of tensile armors positioned around the inner ply (24), the method comprising the following steps:
- placing a rear locking collar (62) of the armor plies (24, 25) around the outer ply (25);
- placing a first shaping guide (82) for shaping the folding of the end segments (32) of the outer ply (25);
- folding the end segments (32) of the outer ply (25) rearwards while forming a bend in front of the locking collar (62), the end segments (32) of the outer ply (25) pressing on the first guide (82);
- folding the end segments (32) of the inner ply (24) rearwards;
**characterized in that** it includes, before the step for folding the end segments (32) of the inner ply (24) rearwards, the placement of a second shaping guide (84) for shaping the folding of the end segments (32) of the inner ply (24), the second shaping guide (84) being separate from the first shaping guide (82), the end segments (32) of the inner ply (24) bearing on the second shaping guide (84) after the folding step,
and **in that** it includes, after the folding steps, the following steps:
- inserting a front sealing assembly (54) around the inner tubular structure (31);
- placing a vault (50) of the end-piece in the end of the inner tubular structure (31);
- folding the end segments (32) of the inner ply (24) forward to place them around the vault (50);
- removing the second shaping guide (84);
- folding the end segments (32) of the outer ply (25) forward to place them outwardly at the end segments of the inner ply (24);
- removing the first shaping guide (82); and
- fastening an outer cover (51) of the end-piece on the vault (50), the vault (50) and the outer cover (51) delimiting a chamber (52) between them for receiving the end segments (32) of the inner ply (24) and the outer ply (25) ;
**in that** the step for placing the second shaping guide (84) is carried out after the rearward folding of the end segments (32) of the outer ply (25) around the first shaping guide (82), and before the rearward folding of the end segments (32) toward the inner ply (24) ;
and **in that** the placement of the second shaping guide (84) includes the arrangement, around the inner ply (24), of a front locking collar (102) of the inner ply (24), the second shaping guide (84) being placed on the front locking collar (102).

2. The method according to claim 1, **characterized in that** after the folding steps, the end segments (32) of the outer ply (25) separate from the inner ply (24) in a first axial position (67) along the central axis, the end segments (32) of the inner ply (24) separating from the inner tubular structure (31) in a second axial position (68), axially offset from the first axial position (67).

3. The method according to claim 1 or 2, **characterized in that** the second shaping guide (84) is positioned in front of the bend formed by the end segments (32) of the outer ply (25) during its placement.

4. The method according to any one of the preceding claims, **characterized in that** it includes, after the folding of the end segments (32) of the outer ply (25), and before the placement of the second shaping guide (84), cutting an anti-wear strip (36) positioned between the inner ply (24) and the outer ply (25).

5. The method according to any one of the preceding claims, **characterized in that** it includes a step for removing the front collar (102), after having removed the second shaping guide (84) and before folding the end segments (32) of the inner ply (24) forward to place them around the vault (50).

6. The method according to any one of the preceding claims, **characterized in that** it includes a second step for removing the rear collar (62), after having removed the first shaping guide (82) and before folding the end segments (32) of the inner ply (25) forward to place them outside the end segments of the inner ply (24).

7. The method according to any one of the preceding claims, **characterized in that** it includes inserting a filler material (70) able to solidify in the receiving chamber (52).

8. The method according to any one of the preceding claims, **characterized in that** the first guide (82) and the second guide (84) each have a convex front surface (88, 90), with the convex side oriented forward, the respective end segments (32) of the outer ply (25) and the inner ply (24) each bearing on a respective front surface (88, 90) of the first guide (82) and the second guide (84).

9. A pre-assembly (80; 100) of a flexible pipe (10) end-piece (14), the flexible pipe (10) including an inner tubular structure (31) having a central axis (A-A'), an inner ply (24) of tensile armors positioned around the inner tubular structure (31) and an outer ply (25) of tensile armors positioned around the inner structure (24),
the pre-assembly (80; 100) including:
- a rear locking collar (62) of the armor plies (24, 25) placed around the outer ply (25);
- a first shaping guide (82) for the folding of the end segments (32) of the outer ply (25), the end segments (32) of the outer ply (25) bearing on the first guide (82) while forming a bend in front of the rear locking collar (62);
**characterized in that** it includes a second shaping guide (84) for shaping the folding of the end segments (32) of the inner ply (24), separate from the first shaping guide (82), the end segments (32) of the inner ply (24) bearing on the second guide (84) while forming a bend in front of the rear locking collar (62), and **in that** it includes a front locking collar (102) of the inner ply (24), the second shaping guide (84) being placed on the front locking collar (102).

10. A pre-assembly (80; 100) according to claim 9, **characterized in that** the end segments (32) of the outer ply (25) separate from the inner ply (24) in a first axial position (67) along the central axis (A-A'), the end segments (32) of the inner ply (24) separating from the inner tubular structure (31) in a second axial position (68), axially offset from the first axial position (67).

11. The pre-assembly (80; 100) according to any one of claims 9 to 10, **characterized in that** it includes an anti-wear strip (36) positioned between the inner ply (24) and the outer ply (25), the anti-wear strip (36) having a front edge situated between the first guide (82) and the second guide (84).

12. The pre-assembly (80; 100) according to any one of claims 9 to 11, **characterized in that** the first guide (82) and the second guide (84) each have a convex front surface (88, 90), with the convex side oriented forward, the respective end segments (32) of the outer ply (25) and the inner ply (24) each bearing on a respective front surface (88, 90) of the first guide (82) and the second guide (84).
